# EUROPÄISCHE PATENTSCHRIFT

(11) **EP 0 866 931 B1**
(45) Veröffentlichungstag und Bekanntmachung des Hinweises auf die Patenterteilung: **26.05.1999**
(21) Anmeldenummer: 96942351.6
(22) Anmeldetag: 05.12.1996
(51) Int. Cl.: F16H 61/12

(54) **ELEKTROHYDRAULISCHE STEUEREINRICHTUNG FÜR LASTSCHALTGETRIEBE**
ELECTRO-HYDRAULIC CONTROL DEVICE FOR POWER SHIFT GEARBOXES
UNITE DE COMMANDE ELECTROHYDRAULIQUE POUR BOITES DE VITESSES COUPLABLES SOUS CHARGE

(30) Priorität: 14.12.1995 DE 19546629
(43) Veröffentlichungstag der Anmeldung: 30.09.1998
(73) Patentinhaber: ZF FRIEDRICHSHAFEN Aktiengesellschaft, 88038 Friedrichshafen (DE)
(72) Erfinder: RIEDHAMMER, Michael, D-88697 Bermatingen (DE)
(74) Vertreter: Zietlow, Karl-Peter
(86) Internationale Anmeldenummer: EP9605425
(87) Internationale Veröffentlichungsnummer: WO9721944

(56) Entgegenhaltungen:
- EP-A- 0 524 065
- US-A- 4 903 551
- US-A- 4 936 430

## Beschreibung

Die Erfindung betrifft eine elektrohydraulische Steuereinrichtung für Lastschaltgetriebe, insbesondere in Arbeitsmaschinen, nach der im Oberbegriff von Anspruch 1 näher definierten Art.

Bei Arbeitsmaschinen, wie beispielsweise Baggerladern, werden in der Praxis Lastschaltgetriebe bzw. Gruppengetriebe eingesetzt, die in der Regel derart aufgebaut sind, daß sie neben Schaltelementen für die Fahrtrichtungswahl zusätzliche Schaltelemente aufweisen, mit denen weitere Übersetzungsverhältnisse, d. h. unterschiedliche Geschwindigkeitsbereiche bzw. Gänge für eine Fahrtrichtung, eingestellt werden können. Um ein derartiges Getriebe in einer Arbeitsmaschine bzw. in einem Fahrzeug möglichst flexibel anordnen zu können, werden in der Praxis die Schaltelemente fernsteuerbar, d. h. mit Kabelverbindungen statt mit einem Gestänge, ausgeführt.

Hierzu weisen die aus der Praxis bekannten Getriebesteuerungen für Lastschaltgetriebe elektrohydraulische Signalwandler auf, bei denen hydraulisch-mechanische Komponenten verwendet werden, welche elektrisch über einen Fahrschalter ansteuerbar sind.

Diese bekannten elektrohydraulischen Signalwandler haben den Vorteil, daß sie sehr kostengünstig sind, da in der Regel auf eine zusätzliche Sensorik für deren Hauptfunktion verzichtet werden kann. Daher eignet sich eine derartige Steuereinrichtung insbesondere für Niedrigpreissysteme.

Ein erheblicher Nachteil dieser bekannten Getriebesteuerungen mit elektrohydraulischen Signalwandlern besteht jedoch darin, daß mit diesen Steuereinrichtungen bei Aktivierung einer entsprechenden Schalteinrichtung, wie z. B. eines Schaltventiles, immer ein zugeordnetes Schaltelement betätigt wird, unabhängig davon, ob das Schaltventil von einem Fahrer oder unabsichtlich aufgrund eines Betriebsfehlers, wie z. B. einem Kurzschluß, betätigt wird.

In letzterem Fall kann es vorkommen, daß zu bereits betätigten Gangschaltelementen weitere hinzugeschaltet werden. Neben möglichen Getriebeschäden kann dies, je nach Fahrzustand und Fahrbahnzustand, zu Instabilitäten im Fahrzeugverhalten und zu einer Unfallgefahr führen.

Die US 4,936,430 offenbart eine elektrohydraulische Steuerung für einen Antrieb, bei welchem durch Schalten von Kupplungen Übersetzungsbereiche gewählt werden können. Durch die elektrohydraulische Steuerung wird erreicht, daß auch bei mehreren bestromten Ventilen nur eine Kupplung geschaltet ist.

Der vorliegenden Erfindung liegt daher die Aufgabe zu grunde, eine elektrohydraulische Steuereinrichtung der eingangs genannten Art dahingehend weiterzubilden, daß die Getriebesteuerung mit einer konstruktiv einfachen Ausgestaltung erkennt, ob die Betätigung eines Schaltelementes beabsichtigt erfolgt.

Erfindungsgemäß wird diese Aufgabe dadurch gelöst, daß jeweils eines der Schaltelemente bei einem definierten Schaltzustand von wenigstens zwei betätigten Schaltventilen und wenigstens einem unbetätigten Schaltventil betätigbar ist.

Dadurch, daß eine bestimmte Anzahl, nämlich wenigstens zwei oder gegebenenfalls mehr, der Schaltventile gleichzeitig betätigt werden muß, und eine bestimmte Anzahl, nämlich wenigstens eins, der Schaltventile unbetätigt bleiben muß, um ein Schaltelement betätigen bzw. schalten zu können, bietet die erfindungsgemäße elektrohydraulische Steuereinrichtung insbesondere den Vorteil, daß Fehlschaltungen bzw. unbeabsichtigte Schaltelementbetätigungen weitgehend ausgeschlossen werden können, womit dadurch verursachte getriebeschädigende Auswirkungen verhindert oder zumindest stark abgemildert werden.

Des weiteren wird die Betriebssicherheit im Fahrzustand durch Vermeidung von Fehlschaltungen deutlich erhöht.

Ein weiterer Vorteil der erfindungsgemäßen Steuereinrichtung besteht darin, daß deren konstruktive Ausgestaltung besonders einfach und kostengünstig ist, da nur ohnehin notwendige Ventile und Ansteuerelemente benötigt werden.

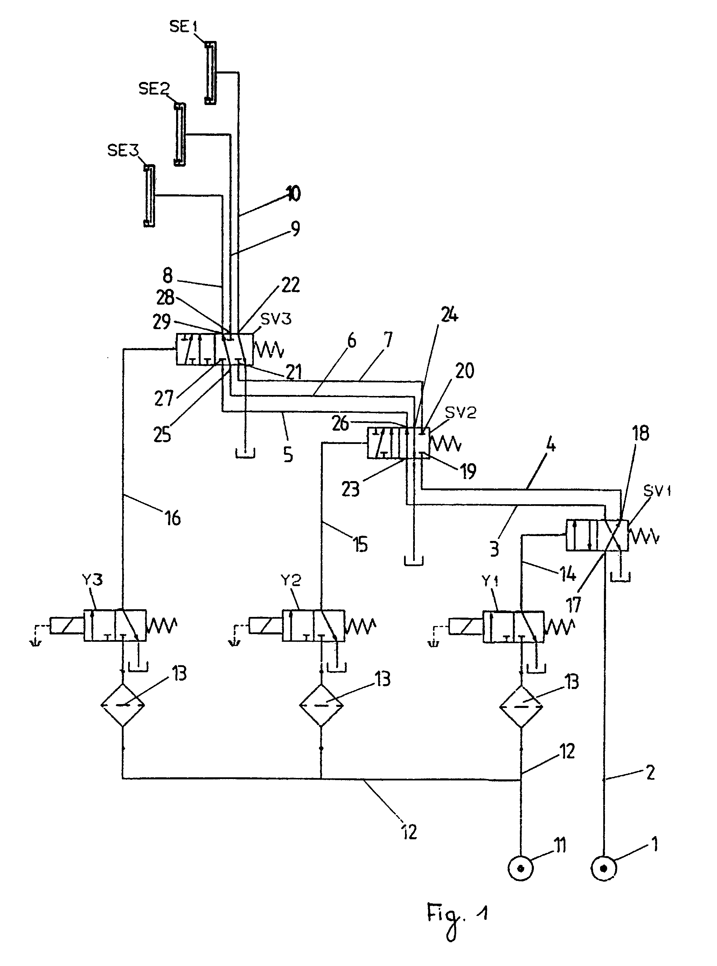

Weitere Vorteile und vorteilhafte Ausbildungen der Erfindung ergeben sich aus den Unteransprüchen und aus dem nachfolgend anhand der Zeichnung prinzipmäßig beschriebenen Ausführungsbeispiel.

Die Zeichnung zeigt eine prinzipmäßige Darstellung einer elektrohydraulischen Steuereinrichtung für ein Lastschaltgetriebe mit drei Schaltelementen SE1, SE2 und SE3.

Die elektrohydraulische Steuereinrichtung ist mit drei Schaltventilen SV1, SV2, SV3 ausgebildet, die zwischen den Schaltelementen SE1, SE2, SE3 und einer externen Druckmittelquelle 1, welche einen eingeprägten Systemdruck zum Betätigen der Schaltelemente SE1, SE2, SE3 aufbringt, seriell angeordnet sind.

Der Systemdruck kann, je nach Stellung der Schaltventile SV1, SV2, SV3, über eine Druckleitung 2 von der externen Druckmittelquelle 1 zu dem Schaltventil SV1, von diesem über eine Druckleitung 3 oder eine weitere Druckleitung 4 zu dem Schaltventil SV2, von diesem über eine von drei Druckleitungen 5,6,7 zu dem Schaltventil SV3 und schließlich von diesem über eine Druckleitung 8 zu dem Schaltelement SE3 oder über eine Druckleitung 9 zu dem Schaltelement SE2 oder über eine Druckleitung 10 zum Schaltelement SE1 geführt werden.

Die Schaltelemente SV1, SV2, SV3 sind mittels eines Vorsteuerdruckes, der von einer weiteren externen Druckquelle 11 aufgebracht wird, schaltbar. Hierzu wird der Vorsteuerdruck über Druckleitungen 12 und einem jeweils zwischengeschalteten Zulauf filter 13 zu Steuerventilen Y1, Y2, Y3 geführt, welche jeweils einem der Schaltventile SV1, SV2, SV3 zugeordnet und mit diesen über eine jeweilige Druckleitung 14, 15, 16 verbunden sind.

Zur Betätigung eines der Schaltventile SV1, SV2, SV3 wird das dem entsprechenden Schaltventil zugeordnete Steuerventil Y1, Y2 oder Y3 über elektrische Impulse angesteuert, wobei die Betätigung der Steuerventile Y1, Y2, Y3 wiederum ferngesteuert erfolgt, indem beispielsweise der Fahrer einer Arbeitsmaschine für seine Gangwahl per Knopfdruck einen Steuerbefehl in Form eines elektrischen Impulses an die Steuerventile Y1, Y2, Y3 gibt.

Nachfolgend sei die Funktionsweise der in der Zeichnung dargestellten elektrohydraulischen Steuereinrichtung näher erläutert.

Das Grundprinzip dieser elektrohydraulischen Steuereinrichtung besteht darin, daß jeweils eines der Schaltelemente SE1, SE2, SE3 nur dann betätigt werden kann, wenn ein definierter Schaltzustand, bei dem eine bestimmte Anzahl der Schaltventile SV1, SV2, SV3 geschaltet ist und eine bestimmte Anzahl davon unbetätigt ist, vorliegt. In dem dargestellten Ausführungsbeispiel ist solch ein definierter Schaltzustand dann gegeben, wenn eine Kombination aus genau zwei geschalteten und einer ungeschalteten Schaltventilstellung vorliegt. D. h. zum Betätigen eines der Schaltelemente SE1, SE2, SE3 müssen genau zwei Schaltventile betätigt werden und ein Schaltventil unbetätigt bleiben, wobei die Kombination der jeweils betätigten Schaltventile bestimmt, welches der Schaltelemente SE1, SE2 oder SE3 geschaltet wird. Wird nur ein Schaltventil, alle drei Schaltventile oder keines der Schaltventile betätigt, so wird eine Neutralstellung bzw. ein Leerlauf eingestellt.

Bei dem in der Zeichnung dargestellten Schaltzustand fließt ein hydraulisches Druckmittel mit dem eingeprägten Systemdruck von der externen Druckmittelquelle 1 über die Druckleitung 2 zu einem Eingang 17 des Schaltventiles SV1. Das Druckmittel strömt in dem Schaltventil SV1 von dem Eingang 17 zu einem Ausgang 18 und fließt über die Druckleitung 4 weiter zu dem Schaltventil SV2, wo es auf einen geschlossenen Eingang 19 trifft. Hier endet der Druckmittelfluß, falls das Schaltventil SV2 nicht über das Steuerventil Y2 betätigt wird.

Wird nun das Schaltventil SV2 betätigt, wird in diesem Schaltventil eine Verbindung zwischen dem Eingang 19 und einem zur Druckleitung 7 hin führenden Ausgang 20 freigeschaltet, wodurch das Druckmittel durch das Schaltventil SV2 über die Druckleitung 7 zu dem Schaltventil SV3 fließen kann. Dort endet der Druckmittelfluß wiederum an einem geschlossenen Eingang 21. Wird das Schaltventil SV3 nicht geschaltet, kann das Druckmittel zu keinem der Schaltelemente SE1, SE2, SE3 weiterströmen und die Getriebesteuerung schaltet auf Leerlauf bzw. Neutralstellung, da nur ein Schaltventil, nämlich das Schaltventil SV2, betätigt wurde.

Wird gleichzeitig mit dem Schaltventil SV2 auch das Schaltventil SV3 über das Steuerventil Y3 geschaltet, wird in dem Schaltventil SV3 eine Verbindung zwischen dem Eingang 21 und einem Ausgang 22 zum Durchfluß des Druckmittels geschaffen, das über die Druckleitung 10 zu dem Schaltelement SE1 strömt, welches damit betätigt wird.

Wird als weitere Variante zusätzlich zu dem Schaltventil SV2 und dem Schaltventil SV3 auch das Schaltventil SV1 über das Steuerventil Y1 betätigt, so wird das Druckmittel über die Druckleitung 3 zu einem Eingang 23 des Schaltventiles SV2, durch dieses zu einem Ausgang 24 und anschließend über die Druckleitung 6 zu einem dann geschlossenen Eingang 25 des Schaltventiles SV3 geleitet. Ein Weiterströmen des Druckmittels zu einem der Schaltelemente SE1, SE2 oder SE3 ist somit nicht mehr möglich. Die Getriebesteuerung stellt in diesem Fall, bei dem alle drei Schaltventile SV1, SV2, SV3 betätigt wurden, wiederum eine Neutral-bzw. Leerlaufstellung ein.

Wird hingegen bei einer anderen Schaltung das Schaltventil SV1 betätigt, wodurch das Druckmittel über die Druckleitung 3 zu dem Eingang 23 des Schaltventiles SV2 geführt wird, und bleibt das Schaltventil SV2 in diesem Falle unbetätigt, kann das Druckmittel durch das Schaltventil SV2 zu einem Ausgang 26 und anschließend über die Druckleitung 5 zu einem zunächst geschlossenen Eingang 27 des Schaltventiles SV3 strömen. Betätigt der Fahrer des Fahrzeuges per Knopfdruck nun neben dem Schaltventil SV1 auch das Schaltventil SV3 über das Steuerventil Y3, so wird eine Druckführung in dem Schaltventil SV3 zu einem Ausgang 28 dieses Schaltventiles hergestellt, womit das Druckmittel über die Druckleitung 9 zum Schaltelement SE2 geführt wird, das damit betätigt wird.

Werden als weitere Variante die Schaltventile SV1 und SV2 betätigt, so wird das Druckmittel über das Schaltventil SV1 und die Druckleitung 3 und durch das Schaltventil SV2 und die Druckleitung 6 zum Schaltventil SV3 geführt, welches im unbetätigten, dargestellten Zustand eine Durchgangsverbindung von dem Eingang 25 zu einem Ausgang 29 aufweist, von welchem aus das Druckmittel über die Druckleitung 8 zum Schaltelement SE3 geführt wird, das damit betätigt wird.

Wie sich aus der vorstehenden Schilderung ergibt, kann das Schaltelement SE1 nur betätigt werden, wenn die Schaltventile SV2 und SV3 betätigt werden, und das Schaltventil SV1 im dargestellten unbetätigten Zustand verbleibt. Zur Betätigung des Schaltelementes SE2 müssen genau die zwei Schaltventile SV1 und SV3 betätigt werden, und zum Betätigen des Schaltelementes SE3 ist es erforderlich, genau die Schaltventile SV1 und SV2 zu schalten. Wird dagegen nur eines, alle drei oder keines der Schaltventile SV1, SV2, SV3 betätigt, geht das Getriebe in Leerlaufstellung.

Falls eine der geschalteten Stellungen abfällt, so wird in jedem Fall die Leerlaufposition eingestellt.

Da zum Betätigen einer der Schaltelemente SE1, SE2, SE3 ein einziger definierter Schaltzustand mit zwei betätigten Schaltventilen eingestellt werden muß, können unbeabsichtigte Fehlschaltungen sowie auch das unbeabsichtigte Einlegen eines Ganges aus der Leerlaufposition heraus beim Betätigen eines Schaltventiles verhindert werden.

Durch eine derartige Getriebesteuerung kann zudem ein absoluter Leerlaufzustand des Getriebes eingestellt werden.

Selbstverständlich sind auch andere, nicht dargestellte Ausführungsformen von derartigen elektrohydraulischen Steuereinrichtungen denkbar, welche mehr als drei Schaltelemente und mehr als drei Schaltventile aufweisen, wobei die Funktionsweise der Steuereinrichtung - mutatis mutandis - dieselbe ist, wie sie zuvor anhand der Zeichnung erläutert wurde. Der grundsätzliche erfinderische Gedanke ist unabhängig von dem zuvor geschilderten konkreten Ausführungsbeispiel und bezieht sich auf eine Vielzahl von Varianten, bei denen die Kombination aus einer bestimmten Anzahl geschalteter und einer bestimmten Anzahl ungeschalteter Schaltventile einen definierten Schaltzustand zur Betätigung eines Schaltelementes darstellt.

### Bezugszeichen

- 1: Druckmittelquelle
- 2: Druckleitung
- 3: Druckleitung
- 4: Druckleitung
- 5: Druckleitung
- 6: Druckleitung
- 7: Druckleitung
- 8: Druckleitung
- 9: Druckleitung
- 10: Druckleitung
- 11: Druckmittelquelle
- 12: Druckleitung
- 13: Zulauf filter
- 14: Druckleitung
- 15: Druckleitung
- 16: Druckleitung
- 17: Eingang des Schaltventils SV1
- 18: Ausgang des Schaltventils SV1
- 19: Eingang des Schaltventils SV2
- 20: Ausgang des Schaltventils SV2
- 21: Eingang des Schaltventils SV3
- 22: Ausgang des Schaltventils SV3
- 23: Eingang des Schaltventils SV2
- 24: Ausgang des Schaltventils SV2
- 25: Eingang des Schaltventils SV3
- 26: Ausgang des Schaltventils SV2
- 27: Eingang des Schaltventils SV3
- 28: Ausgang des Schaltventils SV3
- 29: Ausgang des Schaltventils SV3
- SE1: Schaltelement
- SE2: Schaltelement
- SE3: Schaltelement
- SV1: Schaltventil
- SV2: Schaltventil
- SV3: Schaltventil
- Y1: Steuerventil
- Y2: Steuerventil
- Y3: Steuerventil

## Patentansprüche

1. Elektrohydraulische Steuereinrichtung für Lastschaltgetriebe, insbesondere in Arbeitsmaschinen, mit Schaltelementen (SE1, SE2, SE3), die mit einem Systemdruck aus einer externen Druckmittelquelle (1) betätigbar sind, wobei zwischen der Druckmittelquelle und den Schaltelementen Schaltventile (SV1, SV2, SV3) angeordnet sind, die jeweils über einen Vorsteuerdruck betätigbar sind, dadurch **gekennzeichnet**, daß zur Betätigung jeweils eines der Schaltelemente (SE1, SE2, SE3) wenigstens zwei der Schaltventile (SV1, SV2, SV3) gleichzeitig betätigt werden müssen, während wenigstens eines der Schaltventile (SV1 oder SV2 oder SV3) unbetätigt bleibt.

2. Steuereinrichtung nach Anspruch 1, dadurch **gekennzeichnet**, daß eine Neutral- bzw. Leerlaufstellung durch das gleichzeitige Betätigen aller drei, eines oder keines der Schaltventile (SV1, SV2, SV3) definiert ist.

3. Steuereinrichtung nach Anspruch 1 und 2, dadurch **gekennzeichnet**, daß das erste Schaltelement (SE1) durch Betätigung des zweiten und dritten Schaltventils (SV2 und SV3), das zweite Schaltelement (SE2) durch Betätigung des ersten und dritten Schaltventils (SV1 und SV3) und das dritte Schaltelement (SE3) durch Betätigung des ersten und zweiten Schaltventils (SV1 und SV2) betätigt wird.

4. Steuereinrichtung nach einem der Ansprüche 1 bis 3, dadurch **gekennzeichnet**, daß der Vorsteuerdruck zur Betätigung der Schaltventile (SV1, SV2, SV3) über Steuerventile (Y1, Y2, Y3) geregelt wird.

5. Steuereinrichtung nach Anspruch 4, dadurch **gekennzeichnet,** daß die Steuerventile (Y1, Y2, Y3) einzeln über elektrische Impulse ansteuerbar sind.

## Claims

1. Electrohydraulic control device for power shift transmissions, particularly in driven machines, having shift elements (SE1, SE2, SE3) which are operable by means of a system pressure from an external pressure medium source (1), there being disposed between the pressure medium source and the shift elements shift valves (SV1, SV2, SV3) which are operable in each case by means of a pilot pressure, characterized in that, for operating in each case one of the shift elements (SE1, SE2, SE3), at least two of the shift valves (SV1, SV2, SV3) have to be operated simultaneously, while at least one of the shift valves (SV1 or SV2 or SV3) remains unoperated.

2. Control device according to claim 1, characterized in that a neutral or no-load position is defined by the simultaneous operation of all three, one or none of the shift valves (SV1, SV2, SV3).

3. Control device according to claim 1 and 2,
characterized in that the first shift element (SE1) is operated through operation of the second and third shift valves (SV2 and SV3), the second shift element (SE2) through operation of the first and third shift valves (SV1 and SV3) and the third shift element (SE3) through operation of the first and second shift valves (SV1 and SV2).

4. Control device according to one of claims 1 to 3, characterized in that the pilot pressure for operation of the shift valves (SV1, SV2, SV3) is regulated by means of control valves (Y1, Y2, Y3).

5. Control device according to claim 4, characterized in that the control valves (Y1, Y2, Y3) are individually controllable by means of electrical pulses.

## Revendications

1. Dispositif de commande électro-hydraulique pour boîte de vitesses commandée sous charge, en particulier dans des engins de chantier, comprenant des éléments de commande (SE1, SE2, SE3) qui peuvent être actionnés par une pression de système issue d'une source externe de fluide sous pression (1), dans lequel, entre la source de fluide sous pression et les éléments de commande, sont interposées des valves de commande (SV1, SV2, SV3) qui peuvent être actionnées chacune par une pression pilote, **caractérisé en ce que** pour l'actionnement de chacun des éléments de commande (SE1, SE2, SE3), au moins deux des valves de commande (SVI, SV2, SV3) doivent être actionnées simultanément, tandis qu'au moins une des valves de commande (SV1 ou SV2 ou SV3) reste non actionnée.

2. Dispositif de commande selon la revendication 1, **caractérisé en ce** qu'une position de point mort ou de marche à vide est définie par l'actionnement simultané de toutes les trois, d'une seule ou d'aucune des valves de commande (SV1, SV2, SV3).

3. Dispositif de commande selon la revendication 1 ou 2, **caractérisé en ce que** le premier élément de commande (SE1) est actionné par l'actionnement des deuxième et troisième valves de commande (SV2 et SV3), le deuxième élément de commande (SE2) par l'actionnement des première et troisième valves de commande (SV1 et SV3) et le troisième élément de commande (SE3) par l'actionnement des première et troisième valves de commande (SV1 et SV2).

4. Dispositif de commande selon l'une des revendications 1 à 3, **caractérisé en ce que** la pression pilote pour l'actionnement des valves de commande (SV1, SV2, SV3) est réglée par l'intermédiaire de valves de régulation (Y1, Y2, Y 3).

5. Dispositif de commande selon la revendication 4, **caractérisé en ce que** les valves de régulation (Y1, Y2, Y3) peuvent être commandées individuellement par des impulsions électriques.
